# EUROPEAN PATENT APPLICATION

(11) **EP 2 363 826 A2**
(43) Date of publication of application: **07.09.2011**
(21) Application number: 11156621.2
(22) Date of filing: 02.03.2011
(51) Int. Cl.: G06K 7/00, G06K 19/07, H04B 1/00

(54) **Interrogator and control method of interrogator**

(30) Priority: 03.03.2010 JP 2010047046
(71) Applicant: Toshiba TEC Kabushiki Kaisha, Tokyo 141-8664 (JP)
(72) Inventor: Murofushi, Nobuo, Shinagawa-ku Tokyo 141-8664 (JP)
(74) Representative: Gendron, Vincent Christian

(57) **Abstract**

An interrogator (1) includes: an acquisition unit (51) acquiring an identifier which is stored in a wireless tag (2) and specifies a type of the wireless tag; and a communication unit (52) executing wireless communication using a communication command at transmission power according to the acquired identifier.

## Description

### CROSS-REFERENCE TO RELATED APPLICATION

This application is also based upon and claims the benefit of priority from Japanese Patent Application No, 2010-47046, filed on March 3, 2010; the entire contents of which are incorporated herein by reference.

### FIELD

The present invention relates to an interrogator capable of inquiring tag identification information to an RFID (Radio Frequency Identification) tag or a wireless tag called a transponder by wireless communication and performing predetermined processing on the wireless tag responding in regard to the tag identification information.

### BACKGROUND

In the past, an interrogator, which has an antenna and is capable of reading data from a memory installed in a wireless tag and writing data into the memory by executing wireless communication with the wireless tag present within a communication area by using a radio wave, was developed and put into practical use. The memory of each wireless tag stores a unique ID (tag identification information). Therefore, it is possible to specify each wireless tag by reading the ID of the wireless tag through the interrogator.

When data is written into the wireless tag by such a type of interrogator, the interrogator first transmits an inquiry radio wave without specifying a wireless tag. The wireless tag receiving this inquiry radio wave transmits a response radio wave. The response radio wave is modulated with the ID stored in the memory of the wireless tag. The interrogator detects the ID of the wireless tag by demodulating the response radio wave when the interrogator receives the response radio wave from the wireless tag. Thereafter, the interrogator executes one-to-one wireless communication with the wireless tag having this ID and transmits a data writing command. Thus, desired data is written into the memory of the wireless tag.

In order for the interrogator to write the data into the wireless tag by means of wireless communication, a degree of transmission power is necessary. Therefore, a communicable area of the interrogator is set to be large. As a consequence, when data is written into the wireless tag located near the antenna of the interrogator, there is a possibility that a wireless tag different from the above wireless tag may initially respond to the interrogator.

In order to distinguish a communication target wireless tag from wireless tags other than the communication target wireless tag, there is an interrogator which detects a reception sensitivity when receiving tag identification information responded from the wireless tag, determining whether the reception sensitivity is equal to or larger than a threshold value, sets the wireless tag determined that the reception sensitivity is equal to or larger than the threshold value as the communication target wireless tag, and performs predetermined processing with only the wireless tag.

Many companies manufacture IC chips of wireless tags and antennas of wireless tags. Moreover, the wireless tags manufactured by the companies have different activation powers or response powers of the IC chips. Furthermore, even when the same company manufactures the IC chips, an old model and an improved model may have different activation powers or response powers. Therefore, under the situation where there are plural types of wireless tags, the reception sensitivity is equal to or larger than the threshold value even for a wireless tag distant from the antenna of the interrogator when the interrogator receives the tag identification information. Therefore, predetermined processing may be performed.

### DESCRIPTION OF THE DRAWINGS

Fig. 1 is a schematic block diagram illustrating an interrogator and a wireless tag according to an embodiment of the invention.
Fig. 2 is a functional block diagram illustrating the interrogator according to the embodiment.
Figs. 3A and 3B are diagrams illustrating the wireless tag according to the embodiment.
Fig. 4 is a schematic diagram illustrating information stored in the wireless tag according to the embodiment.
Fig. 5 is a diagram illustrating a data table in which identifiers, transmission powers, and the minimum intensity levels stored in the interrogator correspond to each other according to the embodiment.
Fig. 6 is a flowchart illustrating an operation of the interrogator according to the embodiment.

### DETAILED DESCRIPTION

Hereinafter, an embodiment of the invention will be described with reference to the drawings.

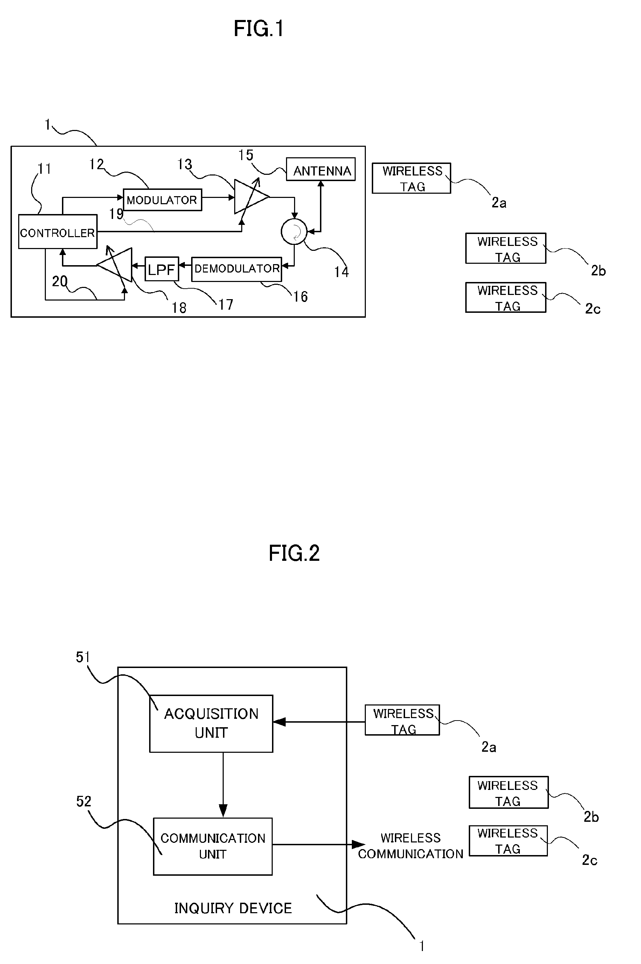

Fig. 1 is a schematic block diagram illustrating an interrogator and a wireless tag. An arrow shown in Fig. 1 indicates a flow direction of a signal. An interrogator 1 includes a controller 11, a modulator 12, a high-frequency variable amplifier 13, a circulator 14, an antenna 15, a demodulator 16, an LPF 17, and a variable amplifier 18.

The controller 11 includes a CPU and a storage unit (neither of which is shown) and controls the interrogator 1 according to a program stored in the storage unit. The controller 11 controls transmission processing and reception processing and communicates with an upper-level apparatus such as a PC (not shown).

The modulator 12 modulates transmission information output from the controller 11, synthesizes the transmission information with a carrier wave to generate a high-frequency signal, and outputs the high-frequency signal. The modulator 12 sometimes outputs only the carrier wave when there is no transmission information.

The high-frequency variable amplifier 13 amplifies input high frequency and outputs the amplified high frequency. The controller 11 controls an amplification ratio via a control line 19. A transmission power to be output is changed by changing the amplification ratio.

The circulator 14 delivers a signal from the high-frequency variable amplifier 13 to the antenna 15 and delivers the signal received by the antenna 15 to the demodulator 16.

The antenna 15 emits the high-frequency signal from the circulator 14 as a radio wave toward a space and outputs the radio wave from the space as the high-frequency signal to the circulator 14. The antenna 15 has a property of strongly emitting a radio wave in a specific direction. The antenna 15 may be a plane patch antenna.

The demodulator 16 demodulates the input high-frequency signal, converts the high-frequency signal into a received data signal, and outputs the received data signal. The LPF (Low Pass Filter) 17 removes a high-frequency component included in the received data signal output from the demodulator 16 and outputs only the received data signal.

The variable amplifier 18 amplifies and outputs the input received data signal. The controller 11 controls the amplification ratio via a control line 20. When an intensity level of the received data signal is small, the controller 11 increases the amplification ratio. When the intensity level of the received data signal is large, the controller 11 decreases the amplification ratio. The intensity level of the received data signal can be known from the set amplification ratio. A given patent document discloses a unit having a function of automatically controlling the amplification ratio as an AGC (Automatic Gain Control) circuit.

Fig. 2 is a block diagram illustrating an example of the interrogator according to the embodiment. The interrogator 1 includes an acquisition unit 51 and a communication unit 52. The acquisition unit 51 acquires an identifier to specify a type of wireless tag stored in the wireless tag. The communication unit 52 executes wireless communication based on a communication command at the transmission power according to the identifier acquired by the acquisition unit 51. Here, the acquisition unit 51 may be realized by cooperation of the antenna 15, the circulator 14, the demodulator 16, the LPF 17, the variable amplifier 18, and the controller 11. The communication unit 52 may be realized by cooperation of the controller 11, the modulator 12, the high-frequency variable amplifier 13, the circulator 14, and the antenna 15.

Wireless tags 2a, 2b, and 2c each include an antenna and an IC chip. The IC chip is an electronic circuit component which includes a power generation unit, a demodulation unit, a modulation unit, a storage unit, and a control unit controlling them. The storage unit stores different identification information in each wireless tag. The wireless tag is specified based on the identification information.

Since the wireless tag 2a is located in a region near the antenna 15 of the interrogator 1, the wireless tag 2a receives a radio wave having a power larger than that of the wireless tags 2b and 2c. When the wireless tags 2a, 2b, and 2c are different only in the identification information and are the same in hardware characteristics or the like, the desired wireless tag 2a is selected by setting the transmission power of the interrogator 1 to be small, operating only the wireless tag 2a, and not operating the wireless tags 2b and 2c.

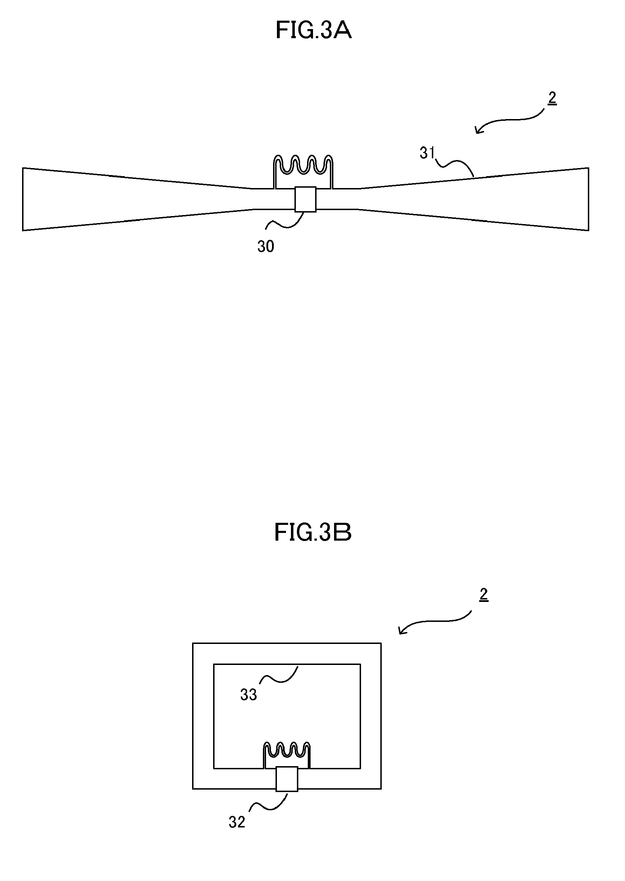

Figs. 3A and 3B are schematic diagrams illustrating the wireless tag. In the following description, the wireless tags 2a to 2c are expressed as the wireless tags 2 when it is not necessary to particularly distinguish the wireless tags 2a to 2c from each other. As shown in Fig. 3A, the wireless tag 2 includes an IC chip 30 and an antenna 31. The radio wave transmitted from the interrogator 1 is delivered to the IC chip 30 via the antenna 31 and is subjected to processing corresponding to a signal included in the radio wave received by the IC chip 30. The antenna 31 has a property corresponding to a linearly-polarized wave. The wireless tag 2 illustrated in Fig. 3A may be modified so as to have the configuration shown in Fig. 3B. That is, the wireless tag 2 shown in Fig. 3B includes an IC chip 32 and an antenna 33 and operates in the same way as that of the wireless tag 2 shown in Fig. 3A. The antenna 33 has a property corresponding to a circularly-polarized wave.

When the IC chips 30 and 32 have the same IC chip property, communication distances are different depending on the different shapes of the antennas.

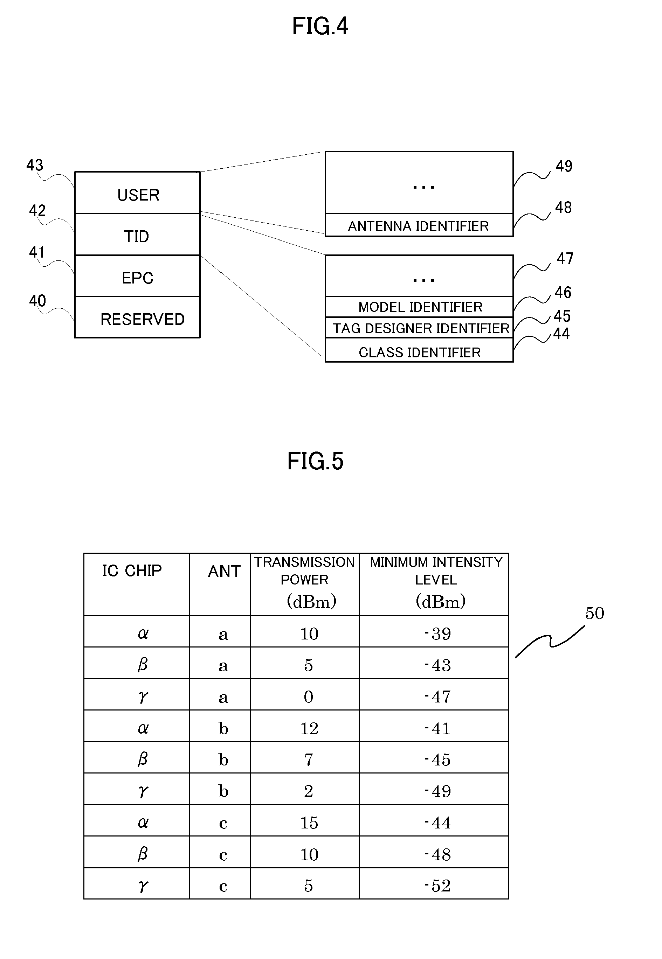

Fig. 4 is a schematic diagram illustrating information stored in the wireless tag 2. In the schematic diagram, a memory format of the wireless tag called Class-1 Generation―2 (hereinafter, referred to as EPC Gen-2) standardized by EPC global is shown.

RESERVED 40 stores information used in a communication protocol with the interrogator. EPC (Electronic Product Code) 41 stores different identification information in the wireless tags 2a to 2c.

TID 42 stores an identifier specifying a type of IC chip. TID 42 includes a class identifier 44, a tag designer identifier 45, and a model identifier 46. The class identifier 44 is defined in ISO/IEC 15963 and stores data corresponding to the protocol used by the wireless tag. Here, "11100010" is allocated in the class identifier of the EPC Gen-2.

The tag designer identifier 45 is administrated by the registered authorized organization and is acquired by IC chip manufacturers. When the manufacturers are different, the tag designer identifiers are different from each other.

The model identifier 46 includes a model number of the IC chip defined by the IC chip manufacturer. When models of the IC chips are different, the model identifiers are different from each other.

TID 42 is stored in a read-only memory and the information written at the time of manufacture may not be rewritten.

On the contrary, information stored in USER 43 may be rewritten by a person using the wireless tag 2. USER 43 includes an antenna identifier 48 and other information 49. The antenna identifier 48 stores information corresponding to the shape of the antenna. After information is written into the antenna identifier 48, the memory area may be set as a writing prohibited area.

The interrogator 1 specifies the type of IC chip of the wireless tag by reading the tag designer identifier 45 and the model identifier 46 of the wireless tag. Alternatively, the type of antenna may be specified from the antenna identifier 48. The tag designer identifier 45, the model identifier 46, and the antenna identifier 48 may be used as the "identifier".

Next, the transmission power of the interrogator 1 will be described as an example in detail. A case will be described in which the interrogator 1 communicates with the wireless tag 2 located within a range up to 10 cm from the antenna 15 on the assumption that a gain of the antenna 15 of the interrogator 1 is 3 dBi. When it is assumed that the wireless tag 2 executing wireless communication has the shape shown in Fig. 3A, the gain of the antenna 31 is 2 dBi, and a minimum activation power of the IC chip 30 is -10 dBm, the transmission power of the interrogator 1 is set to 10 dBm. Then, a maximum communication distance between the interrogator 1 and the wireless tag 2 becomes about 10 cm. Accordingly, only one communication target wireless tag 2 is disposed within the range of 10 cm from the antenna 15 of the interrogator 1. Therefore, when the IC chip is used in which the gain of the antenna 31 is 2 dBi and the minimum activation power of the IC chip 30 is -10 dBm, the wireless tag 2 located out of the range of 10 cm from the antenna 15 of the interrogator 1 is not activated. Thus, erroneous communication with the interrogator 1 is prevented.

When only the wireless tags 2 including the same types of IC chips 30 and antennas 31 are used, the communication target wireless tag 2 is specified by setting the transmission power of the interrogator 1 to be small. However, the wireless tags 2 with different antenna gains are sometimes used due to a restriction on the shape of the antenna in products to which the wireless tags 2 are attached. Moreover, the minimum activation power tends to decrease due to an improvement in the IC chip 30. Accordingly, even when the outer appearances of the wireless tags are the same as each other, the wireless tags 2 with different communication distances are sometimes used.

At this time, the interrogator 1 determines whether the wireless tag 2 is the communication target wireless tag 2 based on the intensity level of the received data signal received from the wireless tag 2. The wireless tag 2 transmits information while reflecting the radio wave from the interrogator 1 in a method called backscatter modulation. When it is assumed that a reflection loss of the wireless tag 2 is 9 dB and a distance between the interrogator 1 and the wireless tag 2 is 10 cm, the intensity level of the received data signal received by the interrogator 1 becomes -39 dBm. When the distance between the interrogator 1 and the wireless tag 2 is shorter than 10 cm, the intensity level of the received data signal becomes larger than -39 dBm.

Therefore, the interrogator 1 determines that the wireless tag 2 is not the communication target wireless tag 2, when the intensity level of the received data signal is smaller than -39 dBm. That is, a minimum intensity level of the received data signal is a threshold value used to determine the communication target wireless tag 2.

When it is assumed that the wireless tag 2 has the shape shown in Fig. 3B, the gain of the antenna 33 is 0 dBi, and the minimum activation power of the IC chip 32 is -10 dBm, the transmission power of the interrogator 1 is set to 12 dBm. Then, the maximum communication distance between the interrogator 1 and the wireless tag 2 becomes about 10 cm. When the reflection loss of the wireless tag 2 is 8 dB, the minimum intensity level of the received data signal received by the interrogator 1 becomes -43 dBm.

For facilitating easy description, a relationship between the transmission power of the interrogator and the minimum intensity level of the received data signal is schematically shown in Fig. 5 when three types of IC chips **α**, **β**, and **γ** are used and three types of antennas a, b, and c are used.

The minimum activation powers of the IC chips **α**, **β**, and **γ** are -10 dBm, -15 dBm, and -20 dBm, respectively. The reflection losses of the IC chips **α**, **β**, and **γ** are 9 dB, 8 dB, and 7 dB, respectively. The antenna gains of the antennas a, b, and c are 2 dBi, 0 dBi, and -3 dBi, respectively.

The transmission power of the interrogator 1 and the minimum intensity level of the received data signal are determined using combinations of the IC chips and the antennas of the wireless tags 2, and it is determined whether the wireless tag communicating with the interrogator 1 is the communication target wireless tag.

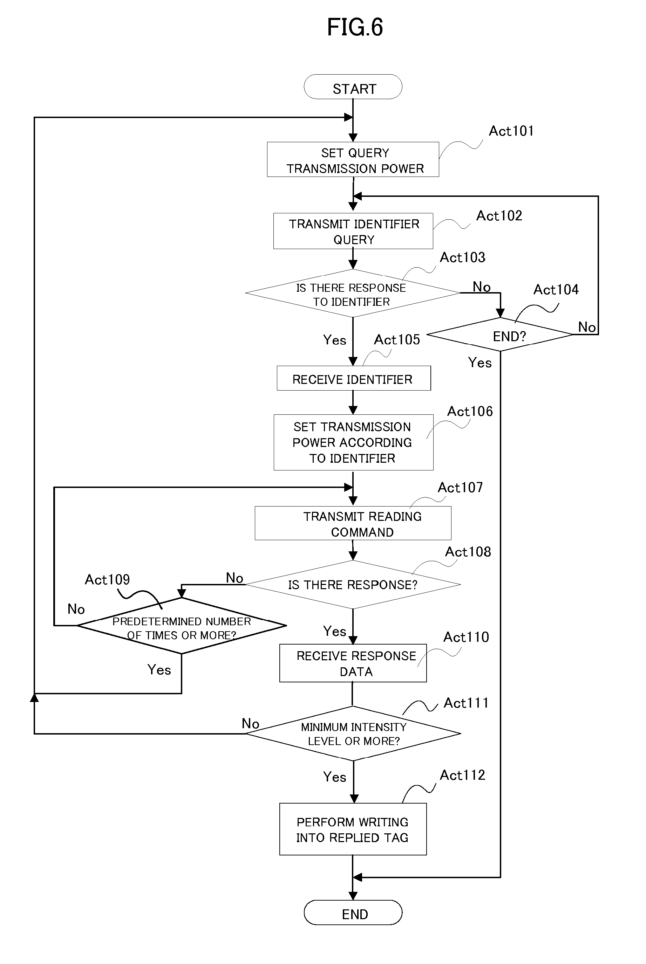

A procedure of writing information into only the wireless tag 2a located near the antenna 15 of the interrogator 1 will be described as predetermined processing with reference to the flowchart shown in Fig. 6.

In Act 101, the interrogator 1 sets the transmission power used to transmit a query to the wireless tag 2. The set transmission power may be set to 15 dBm or more. In Act 102, the interrogator 1 transmits an identifier query command. According to the protocol of the EPC Gen-2, the interrogator 1 transmits Query, receives RN 16 from the wireless tag 2, transmits ACK, receives EPC from the wireless tag, and then transmits a Read command to inquire TID 42 and USER 42 to the wireless tag.

In Act 103, it is determined whether a response to the identifier is made. When the response is made, the process proceeds to Act 105. On the other hand, where there is no response, it is determined whether the process ends. When the process does not end, the process returns to Act 102. When the process ends, the flow of the process ends. The process ends in Act 104 under conditions in which the query is transmitted a predetermined number of times or for a predetermined time and there is no wireless tag 2 responding to the query.

When the identifier is received in Act 105, the transmission power is set by controlling the amplification ratio of the high-frequency variable amplifier 13 of the interrogator 1 according to the identifier received in Act 106. The value of the set transmission power is determined according to a set value table 50. In this embodiment, the transmission power is set to 15 dBm or less.

In Act 107, a reading command (communication command) is transmitted. Here, the reason for transmitting the reading command is to distinguish a plurality of wireless tags 2 with the same identifier and different distances from the interrogator 1 from each other. Accordingly, the reading command is a command used to specify the wireless tag 2 performing writing. For example, the reading command may be a command used to read EPC 41 stored in the wireless tag 2. According to the EPC Gen-2 protocol, a command, such as a Read command, which does not change the information stored in the wireless tag 2 is transmitted.

It is determined whether there is a response in Act 108. When there is the response, the process proceeds to Act 110. On the other hand, when there is no response, the process proceeds to Act 109. In Act 109, it is determined whether the reading command is transmitted a predetermined number of times. When the reading command is not transmitted the predetermined number of times, the process returns to Act 107 and the reading command is retransmitted. On the other hand, when the number of times which transmitted the reading command is the predetermined number of times, the process returns to Act 101. The wireless tag 2 which does not respond even when the reading command is transmitted by the predetermined number of times in Act 109 is considered not to be the wireless tag 2 which desires to execute the writing process since this wireless tag 2 is located out of the communicable range of the interrogator 1.

When there is the response in Act 108, the intensity level of the received data signal is observed while response data is received in Act 110. In Act 111, it is determined whether the intensity level of the received data signal is the minimum intensity level according to the set value table 50. When the received response has the intensity level equal to or higher than the minimum intensity level, the process proceeds to Act 112. On the other hand, when the received response has the intensity level smaller than the minimum intensity level, the process returns to Act 101.

In Act 112, a writing command and writing data are transmitted to the wireless tag 2 and writing is performed. According to the EPC Gen-2 protocol, a Write command or a BlockWrite command are transmitted. When the writing is completed, the flow ends.

The operation of writing the information into the wireless tag is hitherto described. However, the same processing is performed even when the information stored in the wireless tag is changed by an operation of prohibiting information from being written into a storage area of the wireless tag or an operation of setting a password to permit communication with the wireless tag or the like.

In this embodiment, the numerals of dBm unit are used as the intensity of the received data signal. However, instead of the numerals of dBm unit, values set in the AGC circuit may be used.

### Modified Examples

The transmission power set according to the type of wireless tag may be stored in advance in the wireless tag and the subsequent processing may be performed based on the stored transmission power. Here, the subsequent processing is a process after Act 106 of the flowchart shown in Fig. 6. That is, information in which the transmission powers and the types of wireless tags correspond to each other may be stored in the storage unit of each wireless tag.

In the above-described embodiment, the tag designer identifier 45, the model identifier 46, and the antenna identifiers 48 are used as the identifiers used to distinguish the wireless tags from each other, but other configurations may be used. For example, the identifiers used to distinguish the wireless tags from each other may include only the tag designer identifier 45 and the model identifier 46. That is, only the types of IC chips are used as the identification information. For example, since the types of antennas of the wireless tags are all common in the same store in some cases, desired transmission power may be set by storing the types of IC chips, the transmission powers, and the minimum intensity level in correspondence with each other.

The invention may be modified in various forms without departing from the spirit or main features of the invention. Therefore, the above-described embodiments are to be considered illustrative, and the appended claims which are not to be construed as being restrictive, are intended to cover all such scope of the invention. Thus, the appended claims are intended to cover all such modifications, improvements, substitutions, and enhancements pertaining to the equivalent scope of the claims.

## Claims

1. An interrogator comprising:
an acquisition unit acquiring an identifier which is stored in a wireless tag and specifies a type of the wireless tag; and
a communication unit executing wireless communication using a communication command at transmission power according to the acquired identifier.

2. The interrogator according to claim 1, wherein the identifier includes a tag designer identifier and a model identifier.

3. The interrogator according to claim 1, wherein the identifier includes a tag designer identifier, a model identifier, and an antenna identifier.

4. The interrogator according to claim 1, wherein the communication command is a reading command and predetermined processing is performed only on the wireless tag responding by wireless communication using the reading command.

5. The interrogator according to claim 4, wherein an intensity level of a received data signal is detected when the wireless tag responds by the wireless communication using the reading command and the predetermined processing is performed only when the intensity level is equal to or greater than a minimum intensity level according to the identifier.

6. The interrogator according to claim 4, wherein the predetermined processing is a writing process for the wireless tag.

7. The interrogator according to claim 1, further comprising:
a storage medium,
wherein the storage medium stores the transmission power and the identifier in correspondence therewith.

8. A method of controlling an interrogator comprising:
acquiring an identifier which is stored in a wireless tag and specifies a type of the wireless tag; and
executing wireless communication using a communication command at transmission power according to the acquired identifier.

9. The method according to claim 8, wherein the identifier includes a tag designer identifier and a model identifier.

10. The method according to claim 8, wherein the identifier includes a tag designer identifier, a model identifier, and an antenna identifier.

11. The method according to claim 8, wherein the communication command is a reading command and predetermined processing is performed only on the wireless tag responding by wireless communication using the reading command.

12. The method according to claim 11, further comprising: detecting an intensity level of a received data signal when the wireless tag responds by the wireless communication using the reading command; and performing the predetermined processing only when the intensity level is equal to or greater than a minimum intensity level according to the identifier.

13. The method according to claim 11, wherein the predetermined processing is a writing process for the wireless tag.

14. The method according to claim 8, further comprising:
storing the transmission power and the identifier in correspondence therewith.

15. An interrogator comprising:
an acquisition unit configured to acquire an identifier which is stored in a wireless tag and specifies a type of the wireless tag; and
a communication unit configured to execute wireless communication using a communication command at transmission power according to the acquired identifier.

16. The interrogator according to claim 15, wherein the identifier includes a tag designer identifier and a model identifier.

17. The interrogator according to claim 15, wherein the identifier includes a tag designer identifier, a model identifier, and an antenna identifier.

18. The interrogator according to claim 15, wherein the communication command is a reading command and predetermined processing is performed only on the wireless tag responding by wireless communication using the reading command.

19. The interrogator according to claim 18, wherein an intensity level of a received data signal is detected when the wireless tag responds by the wireless communication using the reading command and the predetermined processing is performed only when the intensity level is equal to or greater than a minimum intensity level according to the identifier.

20. The interrogator according to claim 18, wherein the predetermined processing is a writing process for the wireless tag.
